Europäisches Patentamt

(19) European Patent Office

Office européen des brevets

(11) Numéro de publication: **0 022 406**
**B1**

(12) **FASCICULE DE BREVET EUROPEEN**

(45) Date de publication du fascicule du brevet:
**29.12.82**

(21) Numéro de dépôt: **80401000.7**

(22) Date de dépôt: **02.07.80**

(51) Int. Cl.³: **C 04 B 25/04, E 01 C 7/35**

(54) **Matériaux de construction à base de polyéthylène, leur procédé de fabrication et leur application à la fabrication d'un revêtement routier.**

(30) Priorité: **10.07.79 FR 7917867**

(43) Date de publication de la demande:
**14.01.81 Bulletin 81/2**

(45) Mention de la délivrance du brevet:
**29.12.82 Bulletin 82/52**

(84) Etats contractants désignés:
**AT BE CH DE GB IT LI LU NL SE**

(56) Documents cités:
**BE-A-627 592**
**GB-A-941 070**
**US-A-3 112 681**

(73) Titulaire: **Société Chimique des Charbonnages, Tour Aurore Place des Reflets Cédex no 5, F-92080 Paris La Défense 2 (FR)**

(72) Inventeur: **Lambert, Bernard, 17 Ter Rue Casimir Beugnet, F-62660 Beuvry (FR)**

(74) Mandataire: **Dubost, Thierry, Société Chimique des Charbonnages Service Propriété Industrielle B.P. No 1, F-62160 Bully Les Mines (FR)**

BUNDESDRUCKEREI BERLIN

## Matériaux de construction à base de polyéthylène, leur procédé de fabrication et leur application à la fabrication d'un revêtement routier

La présente invention se rapporte à des matériaux de construction et de revêtement routier, à leur procédé de fabrication et à leur application à la fabrication d'un revêtement routier de propriétés mécaniques améliorées.

On connait depuis longtemps des matériaux à base de bitume utilisés pour le revêtement des routes, pistes d'aéroport, etc. Ces matériaux ont remporté un vif succès commercial parce qu'ils présentent des propriétés de résistance mécanique et de résistance à la fissuration suffisantes pour la plupart des conditions d'utilisation. Cependant certaines portions de routes sont soumises à des conditions d'utilisation particulièrement sévères pour lesquelles les propriétés de résistance des matériaux à base de bitume sont insuffisantes. D'autre part le stockage et la manutention de bitumes sont rendus difficiles par les conditions climatiques des pays chauds, pays dans lesquels leur emploi comme éléments de revêtement routier est donc malaisé.

C'est pour les raisons précédentes qu'il a été proposé de substituer aux bitumes des compositions d'agrégats liés par des polymères. Ainsi le brevet américain n° 3 112 681 décrit des compositions de revêtement, fabriquée par mélange plastique à chaud, comprenant de 90 à 99% d'agrégats et de 1 à 10% en poids d'un polyéthylène linéaire de haut moyen ou bas poids moleculaire et de point de fusion compris entre 43 et 135°C. Le brevet britannique n° 941 070 décrit une composition d'agrégats liés par 1 à 10% en poids d'un polyéthylène de basse densité de viscosité à l'état fondu comprise entre 0,1 et 30 Pa · s; le polyéthylène de cette composition est employé seul si son poids moléculaire est inférieur à 10.000 mais doit être employé en mélange avec une résine de pétrole craqué si son poids moléculaire est supérieur à 10.000. Les exemples 1 à 3 de ce brevet enseignent que la température de malaxage des agrégats et du polymère est d'autant plus élevée que le poids moléculaire de celui-ci est plus élevé; elle dépasse 204°C pour un polyéthylène de poids moléculaire égal à 10.000.

Les compositions décrites par les brevets américain n° 3 112 681 et britannique n° 941 070 présentent de nombreux inconvénients. Leurs propriétés se sont révélées insuffisantes lorsque le polyéthylène n'est pas utilisé en mélange avec un autre composant polymère, tel qu'une résine de pétrole craqué ou du polyisobutylène, ce qui a pour effet d'accroître leur prix de revient de manière inacceptable. De plus la température de malaxage excessivement élevée se traduit par un coût énergétique prohibitif des matériaux de revêtement ainsi obtenus.

Différents auteurs ont cru, ultérieurement, pouvoir pallier les inconvénients précédents soit en augmentant la teneur du polymère dans la composition de revêtement (brevet français n° 2 158 254) soit en ajoutant à la composition un tiers constituant minéral capable de catalyser l'oxydation du polymère (brevets français n° 2 306 953 et 2 338 306). Ces auteurs n'ont pas davantage apporté de solution au problème de l'amélioration de la résistance à la fissuration des compositions d'agrégats liés par des polymères.

Le but de la présente invention consiste à proposer des matériaux de construction et de revêtement routier de propriétés améliorées dont la fabrication soit possible à coût énergétique réduit.

La présente invention est basée sur l'idée que, contrairement à l'enseignement de l'art antérieur, cette amélioration ne doit pas être recherchée en modulant la quantité de polymère dans la composition ni en ajoutant des tiers constituants minéraux à la composition, mais en choisissant de manière judicieuse le polymère entrant dans ladite composition. Les études menées dans le cadre de la présente invention ont conduit à s'écarter délibérément de l'enseignement de l'art antérieur et à proposer l'emploi d'un polymère comprenant au moins 50% en poids d'un polymère d'éthylène de poids moléculaire compris entre 12.000 et 50.000, de masse volumique comprise entre 0,90 et 0,93 g/cm$^3$ et de viscosité à l'état fondu supérieure ou égale à 34 Pa · s en mélange avec un autre polymère thermoplastique lorsque ledit polymère d'éthylène n'est pas employé seul.

Les matériaux de construction et de revêtement routier selon l'invention comprennent de 94 à 97% en poids de granulats minéraux et de 3 à 6% en poids de polymère. Par poids moléculaire on entend le poids moléculaire moyen en nombre. Par viscosité à l'état fondu on entend la viscosité à 190°C et à bas taux de cisaillement ($10^{-3}$ S$^{-1}$) mesurée par exemple au moyen d'une balance rhéomètre de type KEPES. Cette viscosité peut atteindre, pour un polymère utilisable selon l'invention, jusqu'à 200 Pa · s environ.

Les polymères d'éthylène utilisés dans le cadre de l'invention sont soit des homopolymères obtenus par polymérisation de l'éthylène au moyen d'un initiateur radicalaire — tel que l'oxygène, les peroxydes ou les peresters — soit des copolymères de l'éthylène et d'au moins un comonomère polaire obtenus également en présence d'un initiateur radicalaire, le comonomère polaire étant généralement choisi parmi le monoxyde de carbone, les anhydrides d'acide dicarboxylique, les esters vinyliques d'acide carboxylique, les esters de l'acide acrylique, etc.

Le polymère entrant dans la composition des matériaux selon l'invention est soit un polymère d'éthylène soit un mélange de plusieurs polymères d'éthylène au sens précédent et d'un autre polymère thermoplastique. Les granulats minéraux entrant dans la composition des matériaux selon l'invention peuvent être de natures extrêmement diverses: basaltes, calcaires, silico-calcaires, sables marins, etc.

Le polymère d'éthylène utilisé selon l'invention diffère de celui du brevet américain n° 3 112 681 par sa masse volumique et de celui du brevet britannique par sa viscosité, ce qui explique le comportement amélioré (notamment la résistance à la fissuration) des matériaux selon l'invention par rapport aux matériaux de l'art antérieur. Par contre la présente invention ne diffère pas sensiblement de l'enseignement de l'art antérieur en ce qui concerne la teneur en polymère dans le matériau: on peut seulement indiquer qu'une teneur inférieure à 3% environ en poids ne procure pas au matériau des propriétés suffisamment élevées tandis qu'une teneur supérieure à 6% environ en poids n'améliore plus sensiblement les propriétés de résistance à la fissuration du matériau et grève le prix de celui-ci.

Le procédé de fabrication des matériaux selon l'invention consiste à malaxer les granulats minéraux et le polymère à une température comprise entre 160° et 190°C. Ce malaxage doit être effectué dans des conditions d'efficacité et de durée telles que le matériau obtenu soit de constitution totalement homogène. Le contrôle de la température pendant l'opération de malaxage revêt une importance particulière parce qu'une élévation incontrôlée de la température entraîne toujours la formation de zones d'hétérogénéité dans le matériau, la présence de telles zones étant responsable de la diminution des propriétés du matériau. De manière souvent préférentielle, la température de malaxage sera choisie entre 170° et 185°C. L'opération de fabrication des matériaux selon l'invention pourra être effectuée dans des machines de malaxage conventionnelles.

Les emplois des matériaux selon l'invention sont extrêmement variés dans le domaine de l'industrie du bâtiment et des travaux publics. Un premier emploi consiste dans la fabrication de revêtements routiers, notamment pour des portions de route, de piste d'aéroport, etc. soumises à des conditions d'utilisation particulièrement sévères. Un second emploi consiste par exemple dans la fabrication de matériaux de construction comme des carrelages et des éléments préfabriqués; pour cette dernière fabrication, l'installation comprend un four de séchage des granulats minéraux, un malaxeur dans lequel on homogénéise le mélange des granulats minéraux séchés et du polymère, une chaîne transporteuse sur laquelle le matériau selon l'invention est comprimé et refroidi, puis un dispositif pour tronçonner le matériau refroidi aux dimensions voulues.

Relativement au premier emploi signalé précédemment, l'invention concerne donc aussi une application de ces matériaux à un procédé de fabrication d'un revêtement routier de propriétés mécaniques améliorées, caractérisé en ce qu'on épand lesdits matériaux sur la surface à revêtir, la durée s'écoulant entre la fabrication du matériau et son épandage étant comprise entre 15 et 150 minutes. Cette caractéristique du procédé est imposée par le fait que dans l'application routière, les matériaux fabriqués par malaxage à chaud sont chargés en l'état sur un camion, le camion est conduit sur le chantier et son contenu est ensuite épandu. Or pendant le chargement et le transport, d'une part la température des matériaux commence à diminuer et d'autre part les matériaux sont en contact avec l'air. On a observé que, en fonction de ces deux phénomènres, la durée s'écoulant entre la fabrication du matériau et son épandage a une influence notable sur la qualité des propriétés mécaniques du revêtement routier obtenu. Plus précisément, ces propriétés commencent à se dégrader lorsque cette durée dépasse 150 minutes, laissant place à l'apparition de fissurations. A l'inverse, les propriétés du revêtement n'ont pas encore atteint leur optimum lorsque cette durée est inférieure à 15 minutes. Les enrobés routiers obtenus par le procédé selon l'invention présentent, à température ordinaire, des caractéristiques remarquables de résistance à la compression, celle-ci atteignant sans diffuculté des valeurs de l'ordre de 100 kgf/cm$^2$ à 20°C; cette résistance à la compression reste d'un niveau élevé à 60°C, permettant un emploi aisé dans les pays chauds. La granulométrie moyenne des granulats minéraux entrant dans la composition de ces enrobés sera, de manière usuelle, comprise entre 0,5 et 5 mm environ et sera choisie de manière adaptée en fonction des carrières disponibles à proximité du lieu de fabrication.

Les exemples suivants ont pour objet d'illustrer l'invention sans prétendre en limiter la protée. Notamment il faut comprendre que le polymère entrant dans la composition des matériaux selon l'invention peut comporter des doses infimes d'antioxydants connus, notamment pour retarder l'évolution de l'enrobé routier chaud au contact de l'air lorsque la durée du transport avant son épandage est importante. De même il faut se rappeler que le polymère entrant dans la composition des matériaux selon l'invention peut être un mélange d'un polymère d'éthylène et d'un autre polymère thermoplastique tel que polybutène-1, polypropylène atactique, caoutchouc, élastomère du type éthylène-propylène-diène, ionomère, etc.

### Exemple 1

On malaxe à une température de 170°C un mélange de 97% de granulats silico-calcaires (granulométrie moyenne: 3 mm) et de 3% d'un polyéthylène A (masse volumique: 0,918 g/cm$^3$; poids moléculaire moyen en nombre 12.000; viscosité à l'état fondu: 175 Pa · s).

Le temps de contact à chaud pendant ce malaxage est de 7 minutes et permet d'obtenir une homogénéité totale du mélange. Le mélange homogénéisé est ensuite transporté sur un chantier de construction de route et l'on commence son épandage 15 minutes après la fin du malaxage. On mesure, la température extérieure étant de 20°C, la résistance à la compression du matériau du revêtement obtenu: elle est de 100 kgf/cm². Ensuite on observe l'aspect du revêtement, qui ne présente aucune fissuration.

### Exemple 2

On malaxe à une température de 180°C un mélange de 94 parties en poids de sable et de 6 parties en poids d'un polyéthylène B (masse volumique 0,914 g/cm³, poids moléculaire moyen en nombre 12.000, viscosité à l'état fondu 34 Pa · s). Un temps de contact à chaud de 1 minute est suffisant pour obtenir une homogénéité totale du mélange. Le mélange homogénéisé est ensuite transporté sur un chantier de construction de route et l'on commence son épandage 150 minutes après la fin du malaxage. On mesure, la température extérieure étant de 20°C, la résistance à la compression du revêtement obtenu: elle est de 105 kgf/cm². Après une période de quelques mois au cours de laquelle le revêtement a été soumis à un trafic important, on ne relève la présence d'aucune fissure.

### Exemples 3 à 8

On mesure les performances mécaniques de matériaux obtenus par malaxage de 96,5 parties en poids de basaltes et de 3,5 parties en poids de différents polymères selon l'invention. La performance mécanique mesurée est la résistance à la compression à 20°C et à 60°C, exprimée en kgf/cm². Le polymère utilisé dans l'exemple 3 est le polyéthylène A décrit à l'exemple 1. Le polymère utilisé dans l'exemple 4 est un mélange par parties égales en poids du polyéthylène A et d'un copolymère éthylène-acétate de vinyle commercialisé sous la référence UE 633 par NATIONAL DISTILLERS. Le polymère utilisé dans l'exemple 5 est un mélange de 2 parties en poids du polyéthylène A pour 1 partie en poids d'un copolymère éthylène-anhydride maléique comprenant 4% de motifs anhydride dans la macromolécule. Le polymère utilisé dans l'exemple 6 est un mélange de 3 parties en poids du polyéthylène A pour 1 partie en poids de ionomère au zinc commercialisé sous la marque Surlyn par DU PONT DE NEMOURS. Le polymère utilisé dans l'exemple 7 est un mélange de 4 parties en poids de polyéthylène A pour 1 partie en poids de poudre de caoutchouc provenant de la récupération de pneumatiques. Le polymère utilisé dans l'exemple 8 est un mélange par parties égales en poids du polyéthylène A et de polybutène-1 (masse volumique: 0,918 g/cm³, indice de fluidité 0,5 dg/mn selon la norme ASTM D-1238-73).

Dans tous les exemples, le polymère a été malaxé avec les granulats à une température de 190°C pendant une durée suffisante pour obtenir un mélange homogène.

Les résultats des mesures réalisées sont consignés dans le tableau ci-après.

Tableau

| Exemple N° | RC (20°C) | RC (60°C) |
|---|---|---|
| 3 | 158 | 71 |
| 4 | 149 | 67 |
| 5 | 192 | 116 |
| 6 | 125 | 48 |
| 7 | 140 | 84 |
| 8 | 171 | 90 |

### Revendications

1. Matériaux de construction comprenant de 94 à 97% en poids de granulats minéraux et de 3 à 6% en poids de polymère, caractérisés en ce que ledit polymère comprend au moins 50% en poids d'un polymère d'éthylène de poids moléculaire compris entre 12.000 et 50.000, de masse volumique comprise entre 0,90 et 0,93 g/cm³ et de viscosité à l'état fondu supérieure ou égale à 34 Pa · s, en mélange avec un autre polymère thermoplastique lorsque ledit polymère d'éthylène n'est pas employé seul.

2. Matériaux de construction selon la revendication 1, caractérisés en ce que ledit polymère thermoplastique est choisi parmi le polybutène-1, le polypropylène atactique, les ionomères et les élastomères éthylène-propylène-diène.

3. Matériaux de construction selon l'une des revendications 1 et 2, caractérisés en ce que le polymère d'éthylène est un homopolymère.

4. Matériaux de construction selon l'une des revendications 1 et 2, caractérisés en ce que le polymère d'éthylène est un copolymère de l'éthylène et d'un comonomère polaire, ledit comonomère étant choisi parmi le monoxyde de carbone, les anhydrides d'acide dicarboxylique, les esters vinyliques d'acide carboxylique et les esters de l'acide acrylique.

5. Procédé de fabrication des matériaux selon l'une des revendications 1 à 4, caractérisé en ce qu'on malaxe les granulats minéraux et le polymère à une température comprise entre 160° et 190°C pendant une durée suffisante pour obtenir un mélange homogène.

6. Procédé selon la revendication 5, caractérisé en ce que la température de malaxage est comprise entre 170° et 185°C.

7. Application des matériaux de construction selon l'une des revendications 1 à 4 à la fabrication d'un revêtement routier de propriétés mécaniques améliorées par épandage desdits matériaux sur la surface à revêtir, caractérisée en ce que la durée s'écoulant entre la fabrication des matériaux et leur épandage est comprise entre 15 et 150 minutes.

## Patentansprüche

1. Baumaterial, enthaltend 94 bis 97 Gew.-% mineralische Granulate und 3 bis 6 Gew.-% Polymer, dadurch gekennzeichnet, daß das Polymer mindestens 50 Gew.-% eines Äthylenpolymers mit einem Molekulargewicht zwischen 12 000 und 50 000, einer Dichte zwischen 0,90 und 0,93 g/cm³ und einer Viskosität in geschmolzenem Zustand von 34 Pa · s oder darüber, in Mischung mit einem anderen thermoplastischen Polymer enthält, wenn das Äthylenpolymer nicht allein verwendet ist.

2. Baumaterial nach Anspruch 1, dadurch gekennzeichnet, daß das thermoplastische Polymer ausgewählt ist aus der Gruppe enthaltend Polybuten-1, ataktisches Polypropylen und Äthylen-Propylen-Dien-Ionomere und -Elastomere.

3. Baumaterial nach Anspruch 1 oder 2, dadurch gekennzeichnet, daß das Äthylenpolymer ein Homopolymer ist.

4. Baumaterial nach Anspruch 1 oder 2, dadurch gekennzeichnet, daß das Äthylenpolymer ein Copolymer von Äthylen und einem polaren Comonomer ist, wobei das Comonomer ausgewählt ist aus der Gruppe enthaltend Kohlenmonoxid, Dicarbonsäureanhydride, Carbonsäurevinylester und Acrylsäureester.

5. Verfahren zur Herstellung der Materialien nach einem der Ansprüche 1 bis 4, dadurch gekennzeichnet, daß man die mineralischen Granulate und das Polymer bei einer Temperatur zwischen 160° und 190°C für eine Dauer mischt, die ausreicht, eine homogene Mischung zu erhalten.

6. Verfahren nach Anspruch 5, dadurch gekennzeichnet, daß die Mischtemperatur zwischen 170° und 185°C liegt.

7. Anwendung der Baumaterialien nach einem der Ansprüche 1 bis 4 bei der Herstellung eines Straßenbelages verbesserter mechanischer Eigenschaften durch Aufgießen der Materialien auf die zu belegende Fläche, dadurch gekennzeichnet, daß die Zeitspanne zwischen der Herstellung der Materialien und deren Aufgießen zwischen 15 und 150 min beträgt.

## Claims

1. Construction materials comprising from 94 to 97% by weight of mineral aggregats and from 3 to 6% by weight of polymer, characterized in that said polymer comprises at least 50% by weight of an ethylene polymer having a molecular weight between 12,000 and 50,000, a density between 0.90 and 0.93 g/cm³ and a viscosity in the molten state greater than or equal to 34 Pa · s, in admixture with another thermoplastic polymer when said ethylene polymer ist not used alone.

2. Construction materials according to claim 1, characterized in that said thermoplastic polymer is selected from polybutene-1, atactic polypropylene, ionomers and ethylene-propylene-diene elastomers.

3. Construction materials according to any of claims 1 and 2, characterized in that the ethylene polymer is a homopolymer.

4. Construction materials according to any of claims 1 and 2, characterized in that the ethylene polymer is a copolymer of ethylene and of a polar comonomer, said comonomer being selected from carbone oxyde, dicarboxylic acid anhydrides, carboxylic acid vinyl esters and acrylic acid esters.

5. A process for manufacturing materials according to any of claims 1 to 4, characterized in that the mineral aggregates and the polymer are mixed at a temperature between 160° and 190°C for a sufficient period of time to provide a homogeneous mixture.

6. A process according to claim 5, characterized in that the mixing temperature is between 170° and 185°C.

7. Application of the construction materials according to any of claims 1 to 4 to the manufacture of a road paving having improved mechanical properties by spreading out said materials on the surface to be paved, wherein the length of time elapsing between manufacture of the material and the spreading out operation lies between 15 and 150 minutes